# EUROPEAN PATENT APPLICATION

(11) **EP 4 775 644 A1**
(43) Date of publication of application: **15.07.2026**
(21) Application number: 26150213.2
(22) Date of filing: 05.01.2026
(51) Int. Cl.: C09K 8/504, E21B 33/138

(54) **GEL-BASED FORMULATIONS FOR WATER AND GAS SHUT-OFF IN A SUB-TERRANEAN ZONE**

(30) Priority: 10.01.2025 EP 25151133
(71) Applicant: Nouryon Chemicals International B.V., 1101 BZ Amsterdam (NL)
(72) Inventor: SUNDBLOM, Andreas, 1101 BZ Amsterdam (NL); PETERSEN, Catarina, 1101 BZ Amsterdam (NL); LAGNEMO, Hans, 1101 BZ Amsterdam (NL)
(74) Representative: Ingrassia, Fisher & Lorenz UK Ltd.

(57) **Abstract**

The invention relates to a method for plugging a formation in a subterranean zone, comprising (i) mixing alkali silicate and colloidal silica particles free of organic silane modification to form a composition; (ii) injecting the composition into the formation in the subterranean zone; and (iii) allowing the composition to be heated to a temperature of at least 40°C to below 90°C for a sufficient time so to form a gel that is impermeable to fluid flow. The invention further relates to the use of a composition comprising alkali silicate and colloidal silica particles free of organic silane modification for plugging a formation in a subterranean zone at a temperature of at least 40°C to below 90°C.

## Description

### Technical Field

The invention relates to a method for plugging a formation in a subterranean zone with a composition comprising potassium silicate and colloidal silica particles free of organic silane modification and the use of such composition for plugging a formation in a subterranean zone.

### Background Art

The co-extraction of water is a common problem experienced during the extraction of mineral hydrocarbons, such as crude oil and natural gas, from subterranean reservoirs. Water occurs naturally in oil and gas wells and reservoirs, for example, from an underlying aquifer or from injector wells, and can mix with and be extracted with the produced hydrocarbons. Co-extraction of water along with mineral hydrocarbons requires expensive separation, treatment, and disposal, which in many cases involves re-injection back into the well. Water cut is the ratio of the quantity of water produced to the total quantity of fluids produced from the production well. It is desirable to minimize the quantity of water that is brought up to the surface, that is, minimize the water cut.

Similar issues arise in oil-wells/wellbores with ingress of unwanted gas, since the gas must be separated and flared before the oil is fed to relevant storage before shipping or fed to a connected distribution pipeline. In many operations, gas handling capabilities are not readily available, so co-production of gas is ideally minimized.

There are many ways that water and gas can enter a subterranean zone, such as, for example, a wellbore or reservoir, during hydrocarbon extraction, for example through porous rock formations such as sedimentary layers or via networks of fissures or cracks that link with a source of water or gas. Various mechanical and chemical treatments can be used to prevent (for example, shut-off), or at least reduce, the ingress of water or gas. Chemical treatments include the use of gels, such as colloidal silica-based gels or gels based on polyacrylide polymers. Examples of colloidal silica-based gels are described in, for example, WO 2009/034287 A1 and WO 2018/213050 A1. Other chemical systems, for example based on polyacrylide polymers, include those described in US 5,125,456 and US 5,957,203. Other applications for colloidal silica-based gel systems include consolidation/binding of particulates, for example before hydraulic fracturing, as described in US 7,013,973.

In gel-type systems, such as colloidal silica-based gel systems, it is important to ensure that the gel time is controlled, in order to allow sufficient time for the colloidal silica to penetrate sufficiently far into the rock formation to provide a sufficient barrier, while not allowing it to penetrate too far such that dilution renders any gel barrier to be ineffective.

Another important requirement for such gelling systems is that they function effectively under the high temperature and pressure conditions associated with subterranean hydrocarbon producing wells. Although colloidal silica systems have been described for other applications, for example for forming subsurface barriers in soil for contaminant containment (US 5,836,390), or for sealing cracks or fissures in rock, soil, roads, tunnels, bridges, or buildings (WO 2004/018381 A1), the conditions experienced in those systems, for example, the temperatures in particular being lower, are very different than experienced in oil and gas production wells. In such oil and gas production wells, the temperature is usually at least 40°C, often even at least 50°C. Hence, colloidal silica containing systems designed for gelling at ambient temperature are not suitable for high-temperature uses as such systems will immediately gel if exposed to above-ambient temperatures when injected into a borehole. Colloidal silica containing systems which have been specifically designed for such high-temperature applications, such as e.g. those described in WO 2018/213050 A1, require specific surface-modified silica which can be difficult to obtain, in particular if gel-times need to be adjusted to particular applications, such as for particular types of subterranean formations.

Hence, there remains a need for improved methods for plugging a formation in a subterranean zone at elevated temperatures, in particular at temperatures of at least 40°C, preferably of at least 50°C, and compositions for use in such improved methods. Such improved methods should ensure that a formation in a subterranean zone is efficiently plugged in a time-controllable manner, preferably with a gel, which is stable over a wide temperature range, and can be removed if necessary, for example, by increasing the pH. Additionally, the application of such improved methods and the compositions used should be less harmful to the environment than organic polymer-based gels that are often used. Moreover, it would be particularly desirable if such improved methods allow the use of compositions which contain as little as possible different components and/or do not require any silane-modified silica.

### Summary of Invention

The present invention is directed to a method for plugging a formation in a subterranean zone, comprising
(i) mixing alkali silicate and colloidal silica particles free of organic silane modification to form a composition;
(ii) injecting the composition into the formation in the subterranean zone; and
(iii) allowing the composition to be heated to a temperature of from 40°C to below 90°C for a sufficient time so to form a gel that is impermeable to fluid flow.

The invention is also directed to the use of a composition comprising alkali silicate and colloidal silica particles free of organic silane modification for plugging a formation in a subterranean zone at a temperature of from 40°C to below 90°C.

### Description of Embodiments

One aspect of the present invention is a method for plugging a formation in a subterranean zone, comprising
(i) mixing alkali silicate and colloidal silica particles free of organic silane modification to form a composition;
(ii) injecting the composition into the formation in the subterranean zone; and
(iii) allowing the composition to be heated to a temperature of from 40°C to below 90°C for a sufficient time so to form a gel that is impermeable to fluid flow.

Provided in this document is a method for plugging a formation in a subterranean zone, preferably in a subterranean oil or gas well. The method includes a step (i) of forming a composition by mixing alkali silicate and colloidal silica particles free of organic silane modification.

The colloidal silica particles free of organic silane modification can in principle be any suitable silica particle, and preferably is a silica sol. Colloidal silica particles and silica sols can be derived from e.g. precipitated silica, micro silica (silica fume), pyrogenic (fumed silica), silanes, siloxane, or silica gels with sufficient purity.

The terms "colloidal silica particles" and "silica sol" used herein also comprise e.g. aluminium-modified and boron-modified silica particles and sols. Boron-modified silica sols are further described in e.g. US 2,630,410. The aluminium modified silica particles suitably have an Al₂O₃ content of from about 0.05 to about 3 wt%, preferably from about 0.1 to about 2 wt%. The procedure of preparing an aluminium modified silica sol is further described e. g. in "The Chemistry of Silica", by Iler, K. Ralph, pages 407-409, John Wiley & Sons (1979) and in US 5 368 833.

The colloidal silica particles suitably have an average particle diameter ranging from about 2 to about 150 nm, preferably from about 5 to about 50 nm, and most preferably from about 10 to about 40 nm. Suitably, the colloidal silica particles have a specific surface area from about 20 to about 1000, preferably from about 40 to about 600, and most preferably from about 60 to about 500 m²/g. The colloidal silica particles suitably have a narrow particle size distribution, i.e. with a low relative standard deviation of the particle size. The relative standard deviation of the particle size distribution is the ratio between the mean particle size by numbers and the standard deviation of the particle size distribution. The relative standard deviation of the particle size distribution preferably is lower than about 60 % by numbers, more preferably lower than about 30 % by numbers, and most preferably lower than about 15 % by numbers. The specific surface area and particle size distribution can be determined using the Sears titration, as for instance described in G. W. Sears, Analytical Chemistry, Volume 28 (12), pp. 1981-1983.

The colloidal silica particles suitably are dispersed in a solvent, which preferably is water, in presence of stabilising cations such as K⁺, Na⁺, Li⁺, NH₄⁺, organic cations, quaternary, tertiary, secondary, and primary amines, or mixtures thereof so as to form an aqueous silica sol. However, also other dispersions such as organic solvents, e.g. lower alcohols, acetone or mixtures thereof may be used to prepare organic silica sols. However, use of aqueous silica sols is preferred in the compositions according to the invention, and the colloidal silica particles added to the composition is dispersed in a solvent in a concentration from about 1 to about 70, preferably from about 5 to about 60, and most preferably from about 10 to about 50 wt% counted as dry weight silica. The pH of the dispersion suitably is from about 1 to about 12, preferably from about 7 to about 11. A high silica content is preferred in the composition as long as the colloidal silica particles remain stable without immediate substantial aggregation and/or gelation before injecting the composition after addition of gel agent. This is beneficial considering the superior technical performance such composition has but also the reduced transportation cost thereof.

The colloidal silica suitably has an S-value from about 20 to about 100, preferably from about 30 to about 90, and most preferably from about 60 to about 90. It has been found that compositions with an S-value within the ranges defined herein can impart improved long-term gel strength. The S-value characterises the extent of aggregation of colloidal silica particles, i. e. the degree of aggregate or microgel formation. The S-value has been measured and calculated according to the formulas given in ller, R. K. & Dalton, R. L. in J. Phys. Chem. ;60 (1956), 955-957. The S-value is dependent on the silica content, the viscosity, and the density of the colloidal silica. A high S-value indicates a low microgel content. The S-value represents the amount of SiO₂ in percent by weight present in the disperse phase of e.g. a silica sol. The degree of microgel can be controlled during the production process as further described in e. g. US 5,368,833.

The colloidal silica particles free of organic silane is mixed with alkali silicate to form a composition. The alkali silicate may be selected from lithium silicate, sodium silicate, and potassium silicate. Preferably, the alkali silicate is potassium silicate.

The composition obtained by mixing the alkali silicate and the colloidal silica particles free of organic silane may contain less than 1 wt.%, preferably less than 0.7 wt.%, even more preferably less than 0.5 wt.% of inorganic salts different from alkali silicate. In some embodiments, the composition is essentially free of inorganic salts different from alkali silicate. In some embodiments, the composition is completely free of inorganic salts different from alkali silicate. When the alkali silicate is potassium silicate, the composition obtained by mixing the potassium silicate and the colloidal silica particles free of organic silane may contain less than 1 wt.%, preferably less than 0.7 wt.%, even more preferably less than 0.5 wt.% of inorganic salts different from potassium silicate. In some embodiments, the composition is essentially free of inorganic salts different from potassium silicate. In some embodiments, the composition is completely free of inorganic salts different from potassium silicate. In all these embodiments, the wt.% are based on the total dry weight of silicate and silica particles.

The composition obtained by mixing the alkali silicate and the colloidal silica particles free of organic silane may contain less than 1 wt.%, preferably less than 0.7 wt.%, even more preferably less than 0.5 wt.% of chloride salts. When the alkali silicate is potassium silicate, the composition obtained by mixing the potassium silicate and the colloidal silica particles free of organic silane may contain less than 1 wt.%, preferably less than 0.7 wt.%, even more preferably less than 0.5 wt.% of chloride salts. In some embodiments, the composition is essentially free of chloride salts. In some embodiments, the composition is completely free of chloride salts. In all these embodiments, the wt.% are based on the total dry weight of silicate and silica particles.

The composition obtained by mixing the alkali silicate and the colloidal silica particles free of organic silane may contain less than 1 wt.%, preferably less than 0.7 wt.%, even more preferably less than 0.5 wt.% of alkali metal chlorides. When the alkali silicate is potassium silicate, the composition obtained by mixing the potassium silicate and the colloidal silica particles free of organic silane may contain less than 1 wt.%, preferably less than 0.7 wt.%, even more preferably less than 0.5 wt.% of alkali metal chlorides. In some embodiments, the composition is essentially free of alkali metal chlorides. In some embodiments, the composition is completely free of chloride alkali metal chlorides. In all these embodiments, the wt.% are based on the total dry weight of silicate and silica particles.

The composition obtained by mixing the alkali silicate and the colloidal silica particles free of organic silane may contain less than 1 wt.%, preferably less than 0.7 wt.%, even more preferably less than 0.5 wt.% of colloidal silica which is surface modified with organic silane. When the alkali silicate is potassium silicate, the composition obtained by mixing the potassium silicate and the colloidal silica particles free of organic silane may contain less than 1 wt.%, preferably less than 0.7 wt.%, even more preferably less than 0.5 wt.% of colloidal silica which is surface modified with organic silane. In some embodiments, the composition is essentially free of colloidal silica which is surface modified with organic silane. In some embodiments, the composition is completely free of colloidal silica which is surface modified with organic silane. In all these embodiments, the wt.% are based on the total dry weight of silicate and silica particles.

The term "is essential free of" as used herein means that the respective component may be contained in the composition an amount of 0.2 wt.% or less, preferably 0.1 wt.% or less, wherein the wt.% are based on the total dry weight of silicate and silica particles in the composition.

The composition obtained by mixing the alkali silicate and the colloidal silica particles free of organic silane may consist of alkali silicate, colloidal silica particles free of organic silane modification, and optional solvent. If the alkali silicate is potassium silicate, the composition obtained by mixing the potassium silicate and the colloidal silica particles free of organic silane preferably consists of potassium silicate, colloidal silica particles free of organic silane modification, and optional solvent. The solvent may be any solvent as already described above in the context of preparing a silica sol. Preferably, the solvent is water.

In the composition of the mix obtained by mixing the alkali silicate solution and the colloidal silica with particles free of organic silane the dry-weight ratio of the silica (SiO₂) and the alkali metal (as X₂O, with X = Li, Na, or K) may be from 13/1 to 50/1, and preferably from 20/1 to 43/1. When the alkali silicate is potassium silicate, in the composition obtained by mixing the potassium silicate and the colloidal silica particles free of organic silane the dry-weight ratio of the silica (SiO₂) and the potassium (as K₂O) is preferably from 13/1 to 50/1, and more preferably from 20/1 to 43/1.

The method of the present invention further includes a step (ii) of injecting the composition obtained by mixing the alkali silicate and the colloidal silica particles free of organic silane into the formation in the subterranean zone.

Step (ii) may include flowing the composition into a wellbore to a downhole location and into the formation in the subterranean zone. Preferably, the composition does not form a gel until the composition reaches the formation in the subterranean zone.

The method of the present invention further includes a step (iii) of allowing the composition to be heated to a temperature of from 40°C to below 90°C for a sufficient time so to form a gel that is impermeable to fluid flow. In other words, the composition obtained by mixing the alkali silicate and the colloidal silica particles free of organic silane is designed to not gel at all at ambient temperature or to gel sufficiently slowly at ambient temperature that the composition can reach the formation in the subterranean zone.

The method of the present invention method shuts off fluid flow and in particular water flow into a formation in a subterranean zone, such as in a downhole location in a wellbore. The method may include shutting-in the wellbore for a duration sufficient for the composition to form a gel that is substantially impermeable to fluid flow. "Substantially impermeable" as used herein means that albeit in principle still some fluid can pass the gel, the fluid flow is remarkably supressed by the gel. For instance, the gel may suppress the fluid flow by at least 90%; preferably by at least 95%, more preferably by at least 98%, even more preferably by at least 99%, and particularly preferably by at least 99.9%, in each case relative to the fluid flow without any gel. The composition may form a gel that is completely impermeable to fluid flow. In some embodiments, the gel occupies substantially all of the internal volume of the formation. In some embodiments, the method includes sealing portions of the subterranean zone surrounding the formation into which the composition is to be flowed. In some embodiments, the portions of the subterranean zone are sealed with at least one straddle packer.

The method of the present invention may shut off gas flow into a formation in a subterranean zone, such as in a downhole location in a wellbore. In some embodiments, the method includes shutting-in the wellbore for a duration sufficient for the composition to form a gel that is impermeable to gas flow.

Portions of the subterranean zone surrounding the formation into which the composition is to be flowed may be sealed. In some embodiments, the portions are sealed using at least one straddle packer.

It is important in the method of the present invention that the composition obtained by mixing the alkali silicate and the colloidal silica particles free of organic silane is allowed to be heated to a temperature of at least 40°C to below 90°C. Preferably, the composition is allowed to be heated to a temperature of at least 45 °C, preferably 50°C, preferably 55 °C, and more preferably to a temperature of at least 60°C.The composition may be allowed to be heated up to a maximum temperature of 88°C, or up to 85 °C, or up to 80°C.

It is also important that the composition obtained by mixing the alkali silicate and the colloidal silica particles free of organic silane is allowed to be heated for a sufficient time so to form a gel that is impermeable to fluid flow.

The time required to ensure the formation of a gel that is substantially impermeable to fluid flow may vary depending on the temperature and/or on the ratio of colloidal silica particles free of organic silane to alkali silicate and/or on the particular alkali silicate. Preferably, the time required to form a gel is from 1 hour to 24 hours, preferably from 2 to 12 hours and more preferably from 3 to 8 hours.

Gel formation can be accelerated with increasing temperatures as well as with decreasing ratio of colloidal silica particles free of organic silane to alkali silicate. For example, when a composition is allowed to be heated to a temperature of from 40°C to 50°C, useful gelling times can be achieved with a dry-weight ratio of silica (SiO₂) to alkali metal (X₂O) of from 13/1 to 23/1, preferably from 15/1 to 22/1. For compositions that are allowed to be heated to a temperature of from 50°C to 70°C, useful gelling times can be achieved with a dry-weight ratio of silica (SiO₂) to alkali metal (X₂O) of from 13/1 to 32/1, preferably from 20/1 to 31/1, and more preferably from 23/1 to 30/1. Likewise, for compositions that are allowed to be heated to a temperature of from 70°C to 85°C, useful gelling times can be achieved with a dry-weight ratio of silica (SiO₂) to alkali metal (X₂O) of from 20/1 to 43/1, preferably from 22/1 to 40/1, and more preferably from 23/1 to 38/1.

Typically, a wellbore is formed in the subterranean zone and extends at least to the formation. The composition can be flowed to the formation through the wellbore. In some embodiments, the composition is placed within the wellbore, for example in targeted formation zones, as a single phase, low-viscosity solution.

Typically, the gelation process is activated by the formation temperature, i.e., the temperature inside the desired location in the subterranean zone. In situ gelation preferably takes place to plug (partially or completely) pore spaces, thereby limiting undesired water production. In some embodiments, the internal volume of the formation into which the composition is flowed is substantially plugged by the gel that forms within the formation, resulting in fluid in the formation (for example water, gas or other fluid) not being able to escape into the wellbore.

### Examples

The following examples are intended to illustrate the invention.

A colloidal silica (40 wt.% SiO₂ and 170m²/g) was mixed with a potassium silicate (23.8 wt.% SiO₂ and 11.07 wt.% K₂O) in accordance with Table 1. The colloidal silica was added first and then the potassium silicate was added during stirring. The blends were then transferred into vials that was sealed and placed in ovens at controlled temperatures. The vials were checked by tilting them regularly. The point where the vials could be put on the side, laying down, without any movement of the fluid was used as the time of gel formation.

**Table 1:**

| Colloidal silica (g) | Potassium silicate (g) | SiO₂/K₂O weight ratio | Gel time at 50°C(h) | Gel time at 70°C (h) | Gel time at 90°C(h) |
|---|---|---|---|---|---|
| 100 | 20 | 20.2 | 12 | 2 | - |
| 100 | 17.5 | 22.8 | 24 | 3 | 0.5 |
| 100 | 15 | 26.2 | - | 4.5 | - |
| 100 | 12.5 | 31.1 | - | 8 | - |
| 100 | 12 | 32.3 | - | - | 1.5 |
| 100 | 11 | 35.0 | - | - | 2.5 |
| 100 | 10 | 38.3 | - | - | 5 |
| 100 | 9 | 42.3 | - | - | 10 |

As can be seen, compositions were obtained which gel at temperatures of at least 40°C. The gel formed was substantially impermeable to water.

## Claims

1. Method for plugging a formation in a subterranean zone, comprising
(i) mixing alkali silicate and colloidal silica particles free of organic silane modification to form a composition;
(ii) injecting the composition into the formation in the subterranean zone; and
(iii) allowing the composition to be heated to a temperature of from 40°C to below 90°C for a sufficient time so to form a gel that is substantially impermeable to fluid flow.

2. Use of a composition comprising alkali silicate and colloidal silica particles free of organic silane modification for plugging a formation in a subterranean zone at a temperature of from 40°C to below 90°C.

3. The method of claim 1 or the use of claim 2, wherein the composition contains less than 1 wt.% of inorganic salts different from alkali silicate, wherein the wt.% are based on the total dry weight of silicate and silica particles.

4. The method of claim 1 or 3, or the use of claim 2 or 3, wherein the composition contains less than 1 wt.% of chloride salts, wherein the wt.% are based on the total dry weight of silicate and silica particles.

5. The method of any one of claims 1, 3, and 4, or the use of any one of claims 2-4, wherein the composition contains less than 1 wt.% of alkali metal chlorides, wherein the wt.% are based on the total dry weight of silicate and silica particles.

6. The method of any one of claims 1, and 3-5, or the use of any one of claims 2-5, wherein the composition is substantially free of alkali metal chlorides.

7. The method of any one of claims 1, and 3-6, or the use of any one of claims 2-6, wherein the composition is substantially free of chloride salts.

8. The method of any one of claims 1, and 3-7, or the use of any one of claims 2-7, wherein the composition is substantially free of inorganic salts different from alkali silicate.

9. The method of any one of claims 1, and 3-8, or the use of any one of claims 2-8, wherein the composition consists of alkali silicate, colloidal silica particles free of organic silane modification, and optional solvent.

10. The method of any one of claims 1, and 3-9, or the use of any one of claims 2-9, wherein the dry-weight ratio silica (SiO₂) to alkali metal (as X₂O, X being Na, K or Li) is from 20/1 to 43/1.

11. The method of any one of claims 1, and 3-10, or the use of any one of claims 2-10, wherein the alkali silicate is potassium silicate.

12. The method of any one of claims 1, and 3-11, or the use of any one of claims 2-11, wherein the colloidal silica particles free of organic silane modification are present in an aqueous silica sol.

13. The method of any one of claims 1, and 3-12, or the use of any one of claims 2-12, wherein the colloidal silica particles free of organic silane modification are present in an aqueous silica sol having an S-value from about 60 to about 90.

14. The method of any one of claims 1, and 3-13, or the use of any one of claims 2-13, wherein the average particle diameter of the colloidal silica particles free of organic silane modification ranges from about 7 to about 50 nm.

15. The method of any one of claims 1, and 3-14, wherein the composition is allowed to be heated to a temperature of at least 50°C and preferably up to 88°C or less; or the use of any one of claims 2-13, wherein the composition is used at a temperature of at least 50°C and preferably up to 88°C or less.
